# EUROPEAN PATENT APPLICATION

(11) **EP 3 533 506 A1**
(43) Date of publication of application: **04.09.2019**
(21) Application number: 16919850.4
(22) Date of filing: 26.10.2016
(51) Int. Cl.: A63G 31/04, A63B 23/00, A63B 23/04, G09B 9/02

(54) **VR AMUSEMENT RIDE DEVICE**

(71) Applicant: Hashilus Co., Ltd., Tokyo 100-0006 (JP)
(72) Inventor: ANDO, Akihiro, Tokyo 100-0006 (JP)
(74) Representative: Ipside
(86) International application number: PCT/JP2016/004704
(87) International publication number: WO 2018/078670

(57) **Abstract**

Problem

To provide a VR amusement ride device that enables a user viewing virtual reality images to enjoy the feeling of riding a horse or vehicle by having the user actually ride a machine at the same time as viewing images and that helps to prevent the person experiencing virtual horse riding or other riding from getting so-called VR motion sickness.

Solution

The VR amusement ride device comprises VR image viewing means, image management reproduction means, a seat structure, and seat structure control means. The seat structure comprises a saddle, a base, and a tilt angle adjuster, and the saddle rocks continuously or intermittently about a rocking central axis as a reference axis. The image management and reproduction means records and stores virtual reality image data and event data recorded in memory means, transmits the virtual reality image data to the VR image viewing means and transmits event information based on the event data to the seat structure control means. The seat structure control means varies tilt angle of the rocking central axis of the saddle to forward tilt, backward tilt, right tilt, and left tilt on the basis of the event information.

## Description

### TECHNICAL FIELD

The present invention relates to a device used in a VR (Virtual Reality) amusement to be ridden by a user of the amusement, particularly to a VR amusement ride device that when ridden by a user simultaneously viewing virtual reality images enables the user to enjoy a feeling like being mounted on a horse or some other animal or being on board some type of vehicle or amusement ride, and that helps to prevent the person experiencing virtual horse riding or other riding from getting VR motion sickness.

### BACKGROUND ART

Numerous technologies related to virtual reality-dedicated devices have been developed and put into practice that offer users various simulated experiences by riding a device and viewing images at the same time. Rapid advances in virtual reality related technologies in recent years have led to the development of countless technologies for allowing experiences to be perceived at home, for example, just as if being actually experienced on the spot, and such technologies have come to be applied to many and various genres.

In the present context, virtual reality refers to technology that presents a computer-created simulated world so as to be perceived / comprehended by users as if part of the real world and to technology for creating such environments. Virtual reality related technology is already widely used in fields such as medicine, advertising and education, and with entertainment genres utilizing virtual reality technology having come into the spotlight in recent years, animation equipment exploiting virtual reality of every variety have been developed and put to use.

Amusements based on virtual reality are enjoyed by users wearing goggle-like image viewing devices, and in most cases the so-outfitted user mounts a ride device that is rocked, tilted and otherwise operated in harmony with images being viewed by the user so as to make the user feel as if actually being present within the images. By adopting an amusement configuration of type, the user can be offered simulated experiences such as of simulated tourism or roller coaster and amusement attraction rides, without leaving home. The configuration of amusement equipment using virtual reality technologies has led to various improvisations regarding not only mages but also devices ridden by the user.

For example, JP2010-178777A discloses technology related to a ride device used in virtual reality amusement. Disclosed here is a system comprising a horse riding machine or other exercise machine for use by a subject to engage in physical exercise, which machine incorporates a display for displaying scenic images that change in coordination with movements of the subject, and a configuration is adopted that comprises a control unit that responds to desired photographed images, e.g., street view image contents supplied by Google LLC, being displayed on a display as scenic images by allowing such images to unfold in accordance with rocking motion of the exercise machine, turning in reining direction, and displaying images in that direction. The fact that this configuration treats the subject to a simulated experience of horse riding as if in a real-world setting suggests that an exercise system can be realized that ensures long continuous enjoyment of even simple exercises without boredom.

Although this technology does indeed allow a user to experience simulated horse riding while watching pictures, operational control of the ride device that moves coordinately with the pictures is inadequate. Namely, a structure that gives a sensation matched to uphill and downhill terrain imagery cannot be achieved. Another problem is that a subject is susceptible to so-called VR motion sickness because the ride device does not move in response to left and right turning images to give the subject a corresponding turning sensation.

A need is therefore felt for development of a VR amusement ride device capable of finely reproducing and conveying sensations to a ridden seat structure and of offering a pleasurable simulated horse riding experience that as far as possible avoids causing VR motion sickness sometimes suffered by a rider due to disparity from actual experience.

Patent Document 1: JP2010-178777A

### DISCLOSURE OF THE INVENTION

### Problems to be Overcome by the Invention

An object of the present invention is to provide a VR amusement ride device that is a device used in a VR (Virtual Reality) amusement to be ridden by a user, particularly a VR amusement ride device that when a user viewing virtual reality images actually rides on equipment while simultaneously viewing images enables the user to obtain and enjoy a feeling like being mounted on a horse or some other animal or riding on another type of amusement ride, and that helps to prevent the person experiencing the virtual ride from getting VR motion sickness

### Means for Solving the Problem

The VR amusement ride device for achieving the aforesaid object of the present invention is a VR amusement ride device comprising VR image viewing means for viewing virtual reality images, image management and reproduction means for managing and performing reproduction processing of the virtual reality images, a seat structure to be ridden by a user when viewing virtual reality images, and seat structure control means for controlling rocking motion of the seat structure, wherein the seat structure comprises a saddle for seating a user, a base for rockably supporting the saddle, and a tilt angle adjuster for controlling tilt angle of rocking central axis of the saddle, which saddle is adapted to rock continuously or intermittently with the rocking central axis as reference axis, the image management and reproduction means records and stores virtual reality image data and event data recorded in memory means, transmits virtual reality image data to the VR image viewing means, and transmits to the seat structure control means event information based on event data that record presence / absence of events at places where virtual reality image data are reproduced, and the seat structure control means is adapted to respond to received event information by performing control to vary tilt angle of rocking central axis of the saddle of the seat structure to forward tilt, backward tilt, left tilt and right tilt.

The event data are flag data of discrete events recorded with indication of presence / absence of events at places specified for reproduction of virtual reality image data and comprise ascent flags, descent flags, right turn flags and left turn flags. The image management and reproduction means transmits flag data of events at current place of reproducing virtual reality image data to the seat structure control means as event information. Upon receiving event information, the seat structure control means responds to a case of the event information being an ascent flag by instructing / controlling the tilt angle adjuster of the seat structure so that tilt angle of the rocking central axis of the saddle tilts backward, to a case of the event information being a descent flag by instructing / controlling the tilt angle adjuster of the seat structure so that tilt angle of the rocking central axis of the saddle tilts forward, to a case of the event information being a right turn flag by instructing / controlling the tilt angle adjuster of the seat structure so that tilt angle of the rocking central axis of the saddle tilts rightward, and to a case of the event information being a left turn flag by instructing / controlling the tilt angle adjuster of the seat structure so that tilt angle of the rocking central axis of the saddle tilts leftward.

The saddle is configured to be controllable to move like tracing a figure 8 and while being so controlled being additionally controlled to rock continuously or intermittently.

Moreover, a configuration is adopted whereby the seat structure is equipped with image speed instruction means, and the image management and reproduction means comprises reproduction speed control means for controlling reproduction speed of virtual reality image data based on speed change instruction transmitted from the image speed instruction means.

Further, the VR image viewing means has a configuration consisting of a goggle type display or a retinal projection display.

In addition, the VR image viewing means optionally has a configuration consisting of a dome screen compatible with omnidirectional image projection.

### EFFECTS OF THE INVENTION

Since the present invention is configured as described above, it achieves effects such as the following:
1. A configuration is adopted whereby the saddle has the rocking central axis as reference axis and rocks while simultaneously varying tilt angle of said axis, so that any uphill, downhill, ascending, descending or other sensation experienced when mounted on a horse or some other animal or a bird or when riding on another type of amusement ride can be pseudo-recreated. Moreover, since a configuration is adopted that can control rocking of the saddle based on event information; actions of the saddle can be freely controlled in response to any kind of image.
2. Since a configuration is adopted that uses event data comprising discrete sets of event flag data recorded with indication of presence / absence of events at places specified for reproduction of virtual reality image data, forward, rearward, leftward and rightward tilt angle control and rocking motion of the saddle in response to images can be easily achieved by creating and amending event data.
3. As a configuration is adopted that rocks the saddle in the manner of tracing a figure 8 locus, the user can enjoy an experience close to actual horse riding.
4. Owing to installation of the image speed instruction means on the seat structure, reproduction speed of virtual reality image data can be controlled to enable the user to experience sensations of acceleration and deceleration like those when horse riding.
5. Since the VR image viewing means is constituted as a goggle type display or retinal projection display, virtual reality experiences can be enjoyed within a limited space simply by wearing one or the other of such displays.
6. Since the VR image viewing means is optionally a dome screen compatible with omnidirectional image projection, the user can view powerful omnidirectional images stress free because no special device needs to be worn.

### BEST MODE FOR WORKING THE INVENTION

The VR amusement ride device according to the present invention is explained in detail below based on an embodiment shown in the drawings. FIG. 1 is a schematic diagram illustrating a VR amusement ride device according to the present invention and FIG. 2 is a conceptual diagram of image management and reproduction means. FIG. 3 is a conceptual diagram showing flow of event information.

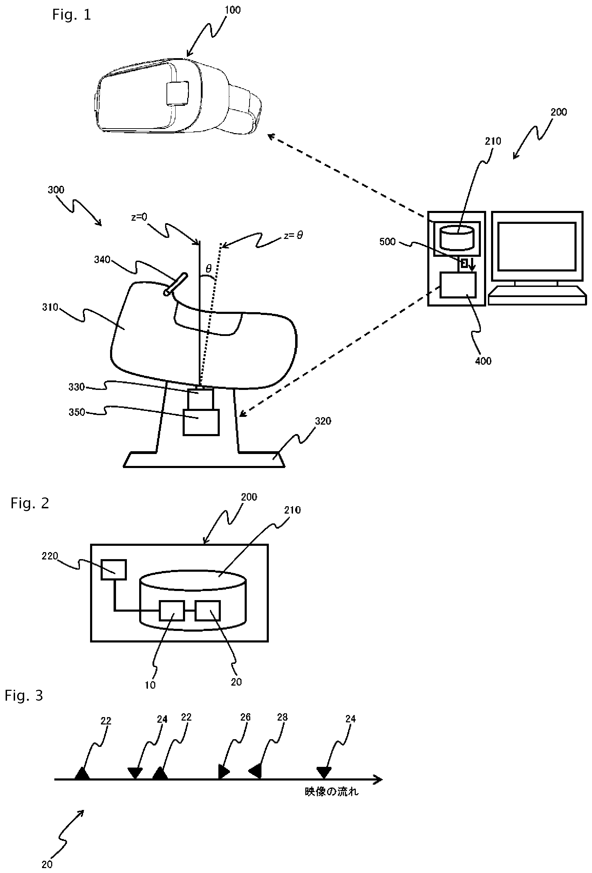

As shown in FIG. 1, a VR amusement ride device 1 according to the present invention is a device comprising VR image viewing means 100, image management and reproduction means 200, a seat structure 300, and seat structure control means 400, which device enables a user to experience virtual reality by wearing the VR image viewing means 100 and, in a state seated on the seat structure 300, viewing virtual reality images managed and reproduced by the image management and reproduction means 200 while the seat structure 300 is rockably controlled by the seat structure control means 400 to synchronize virtual reality images viewed by the user and rocking of the seat structure 300.

The VR image viewing means 100 is constituted as a device for displaying virtual reality images in order to display images used for viewing by the user. In the present embodiment, a configuration is adopted whereby virtual reality image data 10 recorded in memory means 210, which is discussed below, provided in the image management and reproduction means 200 are transmitted to the VR image viewing means 100 and projected onto a display screen viewable by the user.

The image management and reproduction means 200 is means for managing virtual reality image data 10 and performing reproduction processing, and as shown in FIGs. 1 and 2, is equipped with the memory means 210. The memory means 210 comprises a memory medium capable of storing data, which in the present embodiment is a hard disk, flash memory or the like installed in a computer, but is not limited to such and can be selected for use from among optimally suitable memory media.

The memory means 210 records and stores virtual reality image data 10 and event data 20. The virtual reality image data 10 are images that express virtual space composed of 360° omnidirectional images. In the present embodiment, the virtual reality image data 10 are images viewable from the viewpoint of the user when riding a horse and consist of images associated with left/right turning, uphill running, downhill running and the like of the horse, and accompanying sound, but are not limited to such and can instead be suitably selected from among images viewable from the viewpoint of the user when mounted on some other animal or a bird or when riding on another type of amusement ride.

Further the event data 20 are in the form of a data file that records presence / absence and content of events performed at specified image locations when virtual reality image data 10 are reproduced and are managed and stored a separate file from or the same file as the virtual reality image data 10. Makeup of the event data 20 is discussed later.

The image management and reproduction means 200 transmits virtual reality image data 10 to the VR image viewing means 100. As a result, a user wearing the VR image viewing means 100 can view virtual reality images. Although in the present embodiment the image management and reproduction means 200 can use VR image playback software installed in a computer, this is not a limitation and, optionally, a configuration can be adopted that performs VR image playback processing using dedicated equipment.

Moreover, the image management and reproduction means 200 simultaneously transmits event data 20 stored in the memory means 210 to the seat structure control means 400, which is discussed later, as event information 500.

The seat structure 300 is a device ridden by a user when viewing virtual reality images. As shown in FIG. 1, the seat structure 300 comprises a saddle 310, a base 320, and a tilt angle adjuster 330. The saddle 310 is a seat for seating a user using the VR amusement ride device, and the base 320 is a member for supporting the saddle 310. The saddle 310 is structured to be rockably supported by the base 320.

In the present embodiment, a configuration is adopted whereby one or multiple rocking means 350 cause the saddle 310 to perform rocking motion continuously or intermittently. The saddle 310 has a rocking central axis z and performs rocking motion with the rocking central axis z as its central axis. In the present embodiment, the rocking central axis z is initially oriented vertically (i.e., θ = 0°).

The tilt angle adjuster 330 is a member for controlling tilt angle θ of the rocking central axis z serving as reference axis of saddle 310 rocking motion and is installed on the saddle 310 or the base 320. The tilt angle adjuster 330 can freely control tilt angle θ of direction assumed by rocking central axis z of the saddle 310. Owing to this arrangement, the seat structure 300, whose axis is the rocking central axis z controllable to tilt freely in any direction, can vary tilt angle θ of its axis to tilt forward, backward, leftward and rightward, while simultaneously performing continuous or intermittent rocking motion. As a result, a user seated on the seat structure 300 can experience a feeling as if actually mounted on a horse or riding some other animal or being on board some other amusement ride. Although in the present embodiment the tilt angle adjuster 330 is configured to vary tilt angle θ of rocking central axis z by controlling driving means (not shown), this is not a limitation and, optionally, a configuration can be adopted that performs rocking while tilting the saddle 310 forward, backward, leftward and rightward by additionally sending instructions to the rocking means 350 for finely controlling forward, backward, leftward and rightward rocking angle.

The seat structure control means 400 is means for controlling forward tilt, backward tilt, left tilt and right tilt of the tilt angle θ of the saddle 310. The seat structure control means 400 is configured to receive (or read) event information 500 from the image management and reproduction means 200, and based on the received or read event information 500, to perform control by sending instructions to the tilt angle adjuster 330 so as to change tilt angle θ of rocking central axis z of the saddle 310 of the seat structure 300 to forward tilt, backward tilt, left tilt and right tilt.

The event data 20 are various chronologically ordered events of different types assembled into a single file and comprise event flag data representing discrete events by flags recorded with indication of presence / absence of events at places specified for reproduction of virtual reality image data 10. In the present embodiment, the event data 20 comprise ascent flags 22, descent flags 24, right turn flags 26 and left turn flags 28 (see FIG. 3).

Moreover, the event information 500 consists of data created based on event data 20 by synchronizing discrete sets of event flag data and virtual reality image data 10.

The image management and reproduction means 200 transmits the event being performed at the current reproduction place (viewing place) of the virtual reality image data 10 being viewed by the user to the seat structure control means 400 as event information 500 synchronized with virtual reality image data 10. Optionally, rather that adopting a configuration whereby the event information 500 is transmitted to the seat structure control means 400 by the image management and reproduction means 200, it is possible for the seat structure control means 400 to read and use as event information 500 event data 20 recorded and stored in the memory means 210 of the image management and reproduction means 200.

On condition of having received (or read) event information 500, the seat structure control means 400 determines the content of the event flag data thereof. When the event information 500 is an ascent flag 22, the seat structure control means 400 instructs / controls the tilt angle adjuster 330 of the seat structure 300 so that tilt angle θ of rocking central axis z of the saddle 310 tilts backward. As the saddle 310 therefore performs rocking motion while tilting backward, the user mounted on the seat structure 300 can experience a feeling as if riding, for example, a horse that is running up a slope.

Further, when the event information 500 is a decent flag 24, the seat structure control means 400 instructs / controls the tilt angle adjuster 330 of the seat structure 300 so that tilt angle θ of rocking central axis z of the saddle 310 tilts forward. As the saddle 310 therefore performs rocking motion while tilting forward, the user mounted on the seat structure 300 can experience a feeling as if riding a horse, for example, that is running down a slope.

Further, when the event information 500 is a right turn flag 26 , the seat structure control means 400 instructs / controls the tilt angle adjuster 330 of the seat structure 300 so that tilt angle θ of the rocking central axis z of the saddle 310 tilts rightward. As the saddle 310 therefore performs rocking motion while tilting rightward, the user mounted on the seat structure 300 can experience a feeling as if riding a running horse, for example, that is turning right.

Moreover when the event information 500 is a left turn flag 28, the seat structure control means 400 instructs / controls the tilt angle adjuster 330 of the seat structure 300 so that tilt angle θ of the rocking central axis z of the saddle 310 tilts leftward. As the saddle 310 therefore performs rocking motion while tilting leftward, the user mounted on the seat structure 300 can experience a feeling as if riding a running horse, for example, that is turning left.

Since the discrete sets of virtual reality image data 10 recorded in the event data 20 and transmitted to the seat structure control means 400 as event information 500 and the virtual reality image data 10 are synchronized, the seat structure control means 400 responds to, for example, a horse running up a slope being viewed in a horse-riding image or the like being viewed by the user riding the seat structure 300, by detecting an ascent flag 22, whereupon the tilt angle adjuster 330 tilts the tilt angle θ of the rocking central axis z of the saddle 310 backwards.

Since control of forward, backward, leftward and rightward tilting of tilt angle θ and rocking motion of the saddle 310 in accordance with virtual reality image data 10 can therefore be easily achieved, the user can experience sensations just as if actually riding a horse. Moreover, control of forward, backward, leftward and rightward tilting of tilt angle θ and adjustment of rocking motion can be easily enhanced by creating and amending the event data 20 in accordance with virtual reality image data 10.

Furthermore, information representing angle magnitude can be incorporated in the discrete sets of event flag data in addition to ascend, descend, right turn and left turn information. By this it becomes possible to express conditions of various roads, such gradually sloped roads, sharp curves and the like, traveled by the user while enjoying a simulated horse riding experience.

The saddle 310 can be configured to be controlled to move like tracing a figure 8 and while being so controlled being additionally controlled to rock continuously or intermittently. In the present embodiment, the saddle 310 is rocked by the rocking means 350 and the rocking motions are adapted to include ones for drawing figure eights. Rocking motion of the saddle 310 during forward, backward, rightward and leftward tilting as described in the foregoing can therefore be performed to closely resemble actual hose riding.

As another mode of implementing the present embodiment, a configuration can be adopted whereby, as shown in FIG. 1, the seat structure 300 is equipped with image speed instruction means 340. The image speed instruction means 340 is means for varying reproduction speed of virtual reality image data 10, and while being provided as a lever-switch-like member installed on the seat structure 300 at a location reachable by the user riding on the saddle 310, it is not limited to this arrangement and can instead be provided as an independent structure not located on the saddle 310 of the seat structure 300 and, for example, can be configured as a controller or the like of cord-like or stick-like whip shape whose manipulation is detected by an acceleration sensor built into the controller when lashed by the user. Manipulation of the image speed instruction means 340 by the user sends the image management and reproduction means 200 a speed change instruction to increase reproduction speed of virtual reality image data 10. On the other hand, the image speed instruction means 340 is configured to decrease reproduction speed of virtual reality image data 10 when no manipulation is sensed during a predetermined time period. Control of reproduction speed is not limited to the aforesaid method.

The image management and reproduction means 200 incorporates reproduction speed control means 220. The reproduction speed control means 220 is means for controlling reproduction speed of virtual reality image data 10 based on speed change instruction transmitted from the image speed instruction means 340. In the present embodiment, a configuration is adopted whereby, when the image speed instruction means 340 is operated, speed of continuous or intermittent rocking motion of the saddle 310 is simultaneously controlled in accordance with the instructed speed. Namely, a configuration is adopted whereby when reproduction speed of virtual reality image data 10 becomes faster owing to operation of the image speed instruction means 340, rocking motion of the saddle 310 is speeded up accordingly, and when reproduction speed of virtual reality image data 10 becomes slower owing to the image speed instruction means 340 not being operated for a predetermined time period, rocking motion of the saddle 310 is slowed down accordingly. Since this enables control of reproduction speed of virtual reality image data 10, a user can experience feelings of riding a horse that runs faster and slower.

In the present embodiment, the VR image viewing means 100 can be configured as a goggle type display. The goggle type display is a goggle type projection device worn on a human head to cover the eye region, and since the device itself is fitted with an angle sensor and an acceleration sensor, detected goggle angle can be used for calculation processing with respect to direction (portion) of omnidirectional image to be displayed, and omnidirectional image can be displayed on the goggle type display. As this enables enjoyment of images that evoke presence as if actually seeing images in the direction the face is directed, virtual reality experiences can be enjoyed within a limited space simply by wearing this device.

Alternatively, the VR image viewing means 100 can be configured as a retinal projection display. The retinal projection display is a display that focuses / projects directly onto the retina. This enables enjoyment of virtual reality experience with a compact viewing device, and is particularly effective for allowing users with weak vision to easily enjoy virtual reality amusements.

Moreover, the VR image viewing means 100 can be configured as a dome screen onto which omnidirectional images can be projected. The dome screen consists mainly of a sphere-shaped screen, and is a device that enables a user who enters the sphere to view omnidirectional images by projecting omnidirectional images onto the inner wall of the sphere. Available dome screens are of various types including, inter alia, ones structured to project images onto a whole sphere and others having a half-dome as a screen and structured to project images onto the bisected surface. Adoption of such a dome screen facilitates natural projection of omnidirectional images. As this makes wearing of special equipment on the body unnecessary, the user can view powerful omnidirectional images stress free.

Adoption of the aforesaid configuration allows the user to enjoy an experience closely resembling actual horse riding. In addition, since disparity between rocking visually sensed from the virtual reality images viewed through the VR image viewing means 100 and physical rocking produced by the ridden seat structure 300 can be minimized, good agreement is realized between start, accelerate, decelerate, stop, uphill, downhill, right turn, left turn and other feelings sensed visually from viewed virtual reality images and feelings, including actual rocking, experienced when really riding a horse. As so-called VR motion sickness is therefore avoided to the utmost, a VR amusement ride device that minimizes occurrence of unanticipated VR motion sickness can be provided.

### BRIEF EXPLANATION OF THE DRAWINGS

FIG. 1 is a schematic diagram of a VR amusement ride device according to the present invention.
FIG. 2 is a conceptual diagram of image management and reproduction means.
FIG. 3 is a conceptual diagram showing flow of event information.

### EXPLANATION OF SYMBOLS

- 1: VR amusement ride device
- 10: Virtual reality image data
- 20: Event data
- 22: Ascent flag
- 24: Descent flag
- 26: Right turn flag
- 28: Left turn flag
- 100: VR image viewing means
- 200: Image management and reproduction means
- 210: Memory means
- 220: Reproduction speed control means
- 300: Seat structure
- 310: Saddle
- 320: Base
- 330: Tilt angle adjuster
- 340: Image speed instruction means
- 350: Rocking means
- 400: Seat structure control means
- 500: Event information
- z: Rocking central axis
- θ: Tilt angle

## Claims

1. A VR amusement ride device (1) comprising:
VR image viewing means (100) for viewing virtual reality images;
image management and reproduction means (200) for managing and performing reproduction processing of the virtual reality images:
a seat structure (300) to be ridden by a user when viewing virtual reality images; and
seat structure control means (400) for controlling rocking motion of the seat structure (300),
which VR amusement ride device is **characterized in that**
the seat structure (300) comprises a saddle (310) for seating a user, a base (320) for rockably supporting the saddle (310) and a tilt angle adjuster (330) for controlling tilt angle (θ) of rocking central axis (z) of the saddle (310), which saddle (310) is adapted to rock continuously or intermittently with the rocking central axis (z) as reference axis,
the image management and reproduction means (200) records and stores virtual reality image data (10) and event data (20) recorded in memory means (210), transmits virtual reality image data (10) to the VR image viewing means (100), and transmits to the seat structure control means event information (500) based on event data (20) that record presence / absence of events at places where virtual reality image data (10) are reproduced, and
the seat structure control means (400) is adapted to respond to received event information (500) by performing control to vary tilt angle (θ) of rocking central axis (z) of the saddle (310) of the seat structure (300) to forward tilt, backward tilt, left tilt and right tilt.

2. A VR amusement ride device according to claim 1, **characterized in that**:
the event data (20) are flag data of discrete events recorded with indication of presence / absence of events at places specified for reproduction of virtual reality image data (10) and comprise ascent flags (22), descent flags (24), right turn flags (26) and left turn flags (28),
the image management and reproduction means (200) transmits flag data of events at current place of reproducing virtual reality image data (10) to the seat structure control means (400) as event information (500),
the seat structure control means (400), upon receiving event information (500), responds to a case of the event information (500) being an ascent flag (22) by instructing / controlling the tilt angle adjuster (330) of the seat structure (300) so that tilt angle (θ) of the rocking central axis (z) of the saddle (310) tilts backward, to a case of the event information (500) being a descent flag (24) by instructing / controlling the tilt angle adjuster (330) of the seat structure (300) so that tilt angle (θ) of the rocking central axis (z) of the saddle (310) tilts forward, to a case of the event information (500) being a right turn flag (26) by instructing / controlling the tilt angle adjuster (330) of the seat structure (300) so that tilt angle (θ) of the rocking central axis (z) of the saddle (310) tilts rightward, and to a case of the event information (500) being a left turn flag (28) by instructing / controlling the tilt angle adjuster (330) of the seat structure (300) so that tilt angle (θ) of the rocking central axis (z) of the saddle (310) tilts leftward.

3. A VR amusement ride device according to claim 1 or 2, **characterized in that**:
the saddle (310) is controlled to move like tracing a figure 8 and while being so controlled additionally controlled to rock continuously or intermittently.

4. A VR amusement ride device according to any of claims 1 to 3, **characterized in that**:
the seat structure (300) is equipped with image speed instruction means (340) and the image management and reproduction means (200) comprises reproduction speed control means (220) for controlling reproduction speed of virtual reality image data (10) based on speed change instruction transmitted from the image speed instruction means (340).

5. A VR amusement ride device according to any of claims 1 to 4, **characterized in that**:
the VR image viewing means (100) comprises a goggle type display or a retinal projection display.

6. A VR amusement ride device according to any of claims 1 to 4, **characterized in that**:
the VR image viewing means (100) comprises a dome screen compatible with omnidirectional image projection.
